(19) Europäisches Patentamt
European Patent Office
Office européen des brevets

(11) Publication number: **0 007 779 B1**

# (12) EUROPEAN PATENT SPECIFICATION

(45) Date of publication of patent specification: **20.07.83**

(51) Int. Cl.³: **C 08 K 5/29**, C 08 L 67/06, C 08 L 63/00, C 08 L 75/04

(21) Application number: **79301436.6**

(22) Date of filing: **19.07.79**

## (54) Method of increasing the viscosity of a thermoset composition and shaped articles made from this composition.

(30) Priority: **27.07.78 US 928691**

(43) Date of publication of application: **06.02.80 Bulletin 80/3**

(45) Publication of the grant of the patent: **20.07.83 Bulletin 83/29**

(84) Designated Contracting States: **BE DE FR GB IT NL SE**

(56) References cited:
**DE - A - 2 534 247**
**FR - A - 1 107 741**
**FR - A - 1 291 153**
**GB - A - 744 027**
**GB - A - 1 406 545**
**US - A - 2 628 209**
**US - A - 3 373 221**

(73) Proprietor: **ICI AMERICAS INC**
**Concord Pike & New Murphy Road**
**Wilmington Delaware 19897 (US)**

(72) Inventor: **Markiewitz, Kenneth Helmut**
**4012 Green Mount Road**
**Wilmington, Delaware 19810 (US)**

(74) Representative: **Jones, Martin et al,**
**Imperial Chemical Industries PLC Legal Department: Patents Thames House North Millbank**
**London SW1P 4QG (GB)**

**EP 0 007 779 B1**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England

# Method of increasing the viscosity of a thermoset composition, composition so prepared, method of making shaped articles and shaped article

The present invention concerns a method of thickening thermoset resin materials, resulting in thickened compositions and articles produced therefrom. More particularly the thickening is achieved by the addition of a polyfunctional isocyanate, and trimerization catalyst to a solution of the thermoset resins.

Thickening thermoset resins by prior art processes frequently suffer due to lack of control in achieving the desired viscosity or take an unduly long time period to reach the desired viscosity or provide for the formation of products which when cured are deficient in a variety of properties including strength, corrosion resistance, heat stability, and heat distortion temperature among others. In general the prior art processes disclosing thickening techniques rely on the addition of magnesium oxide to unsaturated polyester resins blended with styrene and other polymerizable monomers such as disclosed in U.S. Patent 2,628,209. While thickening does occur it is relatively slow even when elevated temperatures are employed. Additionally, the thickening process is frequently non interruptible causing inconvenience to the manufacturer since relatively little time is available to process these thickened compositions once the desired viscosity has been achieved. Other thickening processes such as disclosed in U.S. Patent 3,373,221 depend greatly on urethane linkages by being limited to resins having a large number of reactive hydroxyl groups present or alternatively adding a hydroxyl containing coreactant with the polyisocyanate to provide urethane thickening. Other nonorganic thickening agents such as metal oxides other than magnesium oxide greatly depend on the presence of acid groups on the resin to achieve thickening.

It has now been discovered that the addition of polyisocyanate and a trimerization catalyst allows for the thickening of a large variety of polymerizable materials independent of any isocyanate reactive groups present on those polymerizable materials. According to the process of the invention there is therefore provided a method of increasing the viscosity of a thermoset resin dissolved in up to 90% by weight of a solvent and having a molecular weight of at least 500 which comprises mixing in an effective amount of a polyfunctional isocyanate and catalytic amount of trimerization catalyst selected from the class consisting of quaternary ammonium hydroxides, quaternary ammonium acetates, quaternary ammonium formates, alkali metal acetates and alkali metal formates to produce a thickened uniformly dispersed or solubilized polymerizable composition. According to the invention there is also provided a thickened uniformly dispersed or solubilized polymerizable composition which comprises a resin produced by mixing:

A. A blend of (1) up to 90 percent by weight of a solvent and (2) at least 10 percent of a polymerizable thermoset resin having a molecular weight of at least 500.
B. a polyfunctional isocyanate.
C. a catalytic amount of a trimerization catalyst selected from the class consisting of quaternary ammonium hydroxides, quaternary ammonium acetates, quaternary ammonium formates, alkali metal acetates and alkali metal formates.

The method of the present invention may be utilized to increase the viscosity of any solution of thermoset resin. such solutions are most frequently thickened to compensate for a greater dilution of the resins in a solvent. Unfortunately, the substitution of more solvent for expensive resin usually translates in a product having reduced physical properties. Surprisingly, the present method produces compositions when cured which minimizes the loss of such properties. Additionally, the processing characteristics of the composition may be improved. For example a preferred embodiment of the above technique finds utility in thickening molding compositions, particularly sheet molding composition to achieve a controllable viscosity, resulting a nontacky, formable, thickened composition having excellent handleability such that it can be stored and cut to size etc. before the final curing operation. Additional properties of the polymerizable materials are discussed hereinafter. Broadly defined, the polymerizable materials which may be thickened according to the present invention are thermoset materials which have a substantial molecular weight such as, for example, a minimum of about 500. The polymerizable materials must be soluble in a solvent and preferably contain little or no groups which are isocyanate reactive. Suitable polymerizable materials include a wide variety of thermosetting resins. For purposes of convenience the term thermoset resins used throughout the specification is meant to include polymerizable materials which when cured form thermoset resins. These resins may include any of the following.

## Resin

Useful resins include ethylenically unsaturated polyesters which comprise the reaction product of at least one ethylenically unsaturated dicarboxylic acid and at least one polyol. A preferred class of polyesters are substantially free of aromatic hydroxyl groups. Exemplary of the polyols which may be used to form the polyester compositions are aliphatic glycols such as ethylene glycol, diethylene glycol, propylene glycol, dipropylene glycol, butane diol, hexanediol, trimethylolpropane, neopentylglycol, dibromoneopentyl glycol, pentaerythritol, and alkylene oxide ethers of phenols such as 2,2-di(4-hydroxyphenyl)propane, 2,2-di(3,5-dibromo, 4-hydroxyphenyl)propane; di(4-hydroxyphenyl) methane;

2,2-di(3-methyl-4-hydroxyphenyl)butane; 4,4′-dihydroxybiphenyl; hydrogenated 2,2-di(4-hydroxyphenyl)propane; 2,4,4′-dihydroxybenzophenone; 4,4′-dihydroxydiphenyl ether; 4,4′-dihydroxydiphenyl sulfone; and 4,4′-dihydroxydiphenol ketone. Mixtures of polyols may be used.

A preferred class of polyols are those represented by the general formula

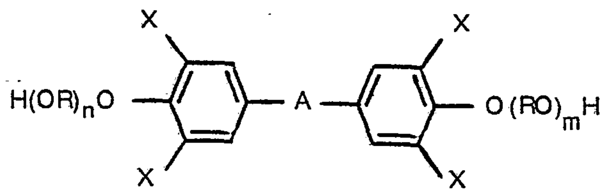

where n and m are integers and the sum of n and m is from 2 to 30, A is an alkylene radical having from 1 to 4 carbon atoms, X is hydrogen or halogen and R is an alkylene radical having from 2 to 4 carbon atoms. Polyoxyalkylene ether polyols corresponding to the above formula are disclosed in U.S. Patent 2,331,265.

Illustrative examples of ethylenically unsaturated dicarboxylic acids and anhydrides which may be used to form the polyester compositions include maleic acid, fumaric acid, and maleic anhydride.

The aforesaid polyester resins may also be prepared by the reaction of a polyol and a mixture of an ethylenically unsaturated dicarboxylic acid and saturated dicarboxylic acid, such as, succinic, adipic, sebacic, azelaic, glutaric, phthalic, isophthalic, and terephthalic. The Diels Alder adduct of hexachlorocyclopentadiene and maleic anhydride (hereinafter called HET anhydride) HET anhydride may be added to water to form HET dibasic acid. Preferably at least about 50% of the dicarboxylic acid moiety of the polyester composition is contributed by an ethylenically unsaturated dicarboxylic acid.

A more detailed description of the polyesters which may be used in accordance with this invention may be found in U.S. Patent 2,634,251 and U.S. patent 3,214,491.

Vinyl esters made through an addition reaction of an epoxy resin with a carboxylated monomer may also be thickened in accordance with the present invention. A preferred class of vinyl esters includes the reaction product of two moles of an unsaturated acid, such as methacrylic or acrylic acid, and an epoxy polymer, such as the diglycidyl ether of 2,2-di(4-hydroxyphenyl) propane, the diglycidyl ether of 2,2-di(3,5-dibromo, 4-hydroxyphenyl) propane, higher molecular weight homologues of these epoxies as well as the epoxy Novolaks. These resins are further discussed in U.S. Patent 3,373,221.

Urethane resins may also be thickened according to the present invention. These include vinyl ester urethane resins disclosed in U.S. Patent 3,876,726 and prepared by reacting (a) the reaction product of a polyoxyalkylene bisphenol A and a polycarboxylic acid or anhydride, (b) a polyfunctional isocyanate having an average isocyanate functionality of at least two, and (c) a monohydroxyl-terminated ester of acrylic acid or methacrylic acid resulting in products having the formula:

$$B—I—[A—M]_y\ A—(I—B)_q$$ wherein

A is a radical derived from a polyoxyalkylene bisphenol A having the following formula

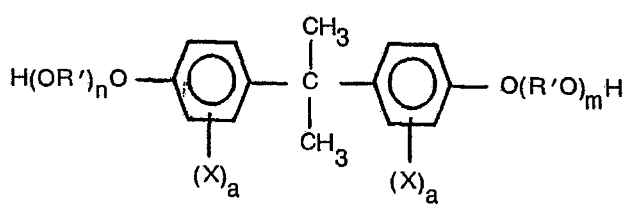

wherein

R′ is $C_1$—$C_4$ alkylene group,

X is halogen or a $C_1$—$C_4$ alkyl group,

a is an integer equal to from 0 to 2, and

m and n are integers each of which is equal to at least 1 and the sum of which is equal to from 2.0 to 30.0;

M is a radical derived from A) an unsaturated, aliphatic, polycarboxylic acid or an anhydride thereof, B) a saturated aliphatic polycarboxylic acid or an anhydride thereof, C) an aromatic polycarboxylic acid or anhydride thereof or D) mixtures of A, B, or C;

I is a radical derived from an isocyanate having an isocyanate functionaility of at least 2;

B is a radical derived from a monohydroxyl-terminated ester of unsubstituted or substituted acrylic or methacrylic acid wherein the substitutents are halogen or $C_1$—$C_4$ alkyl groups; y is an integer equal to from 1 to 12, q is zero or one.

Various isocyanurate resins may also be thickened according to the invention. Preferred isocyanurates are isocyanurates of urethanes of an aromatic polyisocyanate and at least one vinylidene carbonyl oxy alkanol.

Of particular interest are isocyanurates of urethanes of an aromatic polyisocyanate and at least one vinylidene carbonyl oxy alkanol characterized by one of the following formulae:

(1) 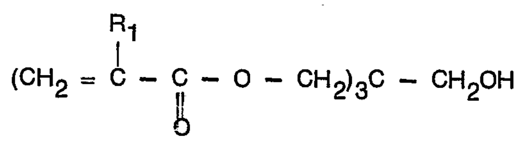

(2) 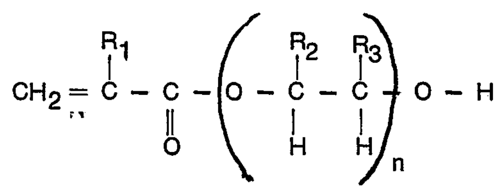

(3) 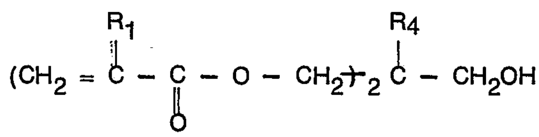

(4) 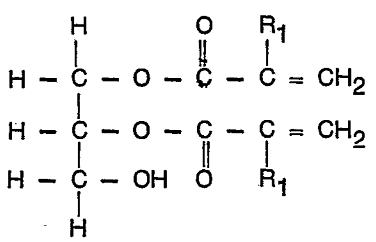

and

(5) 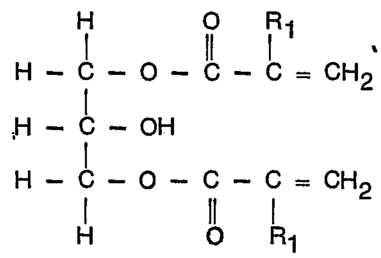

wherein $R_1$ is hydrogen or an alkyl group containing from 1 to 4 carbon atoms, $R_2$ is hydrogen, alkyl containing from 1 to 12 carbon atoms, or a chlorinated, brominated, or fluorinated alkyl group containing from 1 to 12 carbon atoms, $R_3$ is hydrogen, alkyl containing from 1 to 12 carbon atoms, or a chlorinated, brominated, or fluorinated alkyl group containing from 1 to 12 carbon atoms, $R_4$ is hydrogen, methyl or ethyl, and n is from one to four, with the proviso that $R_2$ and $R_3$ on adjacent carbon atoms are not both alkyl or chlorinated, brominated, or fluorinated alkyl, that is at least one of $R_2$ and $R_3$ must be hydrogen.

## Solvent

As mentioned hereinabove the invention is applicable to thickening polymerizable materials dissolved in a solvent. The term solvent as used throughout the specification is meant to include dispersion medium. Preferred solvents are vinyl monomers which allows for a substitution of possibly expensive polymerizable materials with cheaper comonomers. Useful vinyl monomers include any which are non-reactive, that is, the solvent should preferably not contain any groups which would react with isocyanate groups or in any way interfere with the trimerization reaction. Thus, the solvent should not contain any hydroxyl, carboxy, or amine groups which might interfere with this reaction. This then preferably limits the suitable solvents to esters, ethers, hydrocarbons and similar solvents containing non-reactive groups. Illustrative examples of polymerizable solvents which may be employed in this process include styrene, methyl methacrylate, divinylbenzene, ethyl methacrylate, ethyl acrylate, methyl acrylate, 2-ethylhexyl acrylate, 2-ethylhexyl methacrylate, butyl acrylate, butyl methacrylate, isobutyl methacrylate, cyclohexyl methacrylate, cyclohexyl acrylate, chlorostyrene, acrylonitrile, vinylidene chloride, vinyl acetate, vinyl stearate, vinyltoluene, hexanediol diacrylate, hexanediol dimethacrylate, polyethylene glycol diacrylate, dimethylstyrene, ethylstyrene, propylstyrene, p-chloro-methyl styrene, m-dibromoethylstyrene, bromostyrene, t-butyl styrene, vinyl propionate, vinyl butyrate, tetrahydrofurfuryl methacrylate, N-vinylpyrrolidone, diethylene glycol diacrylate, triethylene glycol diacrylate, allyl methacrylate, diallyl fumarate, 1,3-butylene glycol dimethacrylate, polyethylene glycol diacrylate, tetramethylene glycol diacrylate, trimethylol propane triacrylate, neopentyl glycol diacrylate, and 1,3-butylene glycol diacrylate.

However non-polymerizable solvents may also be used. Illustrative solvents include benzene, toluene, xylene, dioxane, methyl ethyl ketone, ethyl acetate, and ethyle benzene. Mixtures of solvents may also be used.

A preferred class of solvents are those which contain at least one polymerizable double bond. A particularly preferred solvent is styrene. Other preferred solvents are a mixture of styrene and methyl methacrylate or a mixture of styrene and divinylbenzene.

The amount of solvent employed to dissolve the thermoset resins utilized in this invention may vary over a very wide range of from about 10 to 90% by weight of resin. The particular amount of solvent used will depend somewhat on the nature of the solvent and on the solubility of the particular resin composition used. The character of the trimerized polyisocyanate formed allows the maintenance of adequate working viscosities at relatively low concentrations of dissolved solids. However vinyl isocyanurate resin should preferably be dissolved in no more than 75% solvent by weight of solution. Products of this invention may be made which permit adequate laminate working viscosity, which is defined as 100 to 1,000 mPa's as determined on a Brookfield Viscometer, Model LVT, #2 spindle, at 30 rpm., at 25°C. The amount of solvent will also depend on the nature of the properties desired in the final cured product.

## Polyfunctional Isocyanate

The polyisocyanate used in the process of this invention may be any trimerizable polyisocyanate which is conventionally used in the art for the preparation of isocyanurates. For example, the polyisocyanate may be saturated, unsaturated, monomeric or polymeric. The only requirements are that the polyisocyanate contain at least two isocyanate groups, be trimerizable, and be free of any groups which interfere with the trimerization of isocyanate groups or which interfere in the reaction of an isocyanate group with hydroxyl group.

Illustrative examples of polyisocyanates which are particularly useful include: 2,4-tolylene diisocyanate, 2,6-tolylene diisocyanate; m-phenylene diisocyanate; p-phenylene diisocyanate; 1,5-naphthalene diisocyanate; 4,4′-diphenyl ether diisocyanate; 4,4′,4″-triphenylmethane triisocyanate; 2,4,4′-triisocyanatodiphenylmethane; 2,2′,4-triisocyanato diphenyl; 4,4′-diphenylmethane diisocyanate; 4,4′-benzophenone diisocyanate; 2,2-bis(4-isocyanatophenyl)propane; 1,4-naphthalene diisocyanate; 4-methoxy-1,3-phenylene diisocyanate; 4-chloro-1,3-phenylenediisocyanate; 4-bromo-1,3-phenylene diisocyanate; 4-ethoxy-1,3-phenylene diisocyanate; 2,4′-diisocyanatodiphenyl ether; 4,4′-diisocyanatodiphenyl; 9,10-anthracene diisocyanate; 4,6-dimethyl-1,3-phenylene diisocyanate; 4,4′-diisocyanatodibenzyl; 3,3′-dimethyl-4′-diisocyanatodiphenylmethane; 3,3′-dimethyl-4,4′-diisocyanatodiphenyl; 3,3′-dimethoxy-4,4′-diisocyanatodiphenyl; 1,8-naphthalene diisocyanate; 2,4,6-tolylene triisocyanate; 2,4,4′-triisocyanatodiphenyl ether; diphenylmethane diisocyanate available under the trademarks Mondur and Papi, having a functionality of 2.1 to 2.7; 1,3-xylene 4,6-diisocyanate; aromatic isocyanate terminated polyurethanes; aromatic isocyanate terminated prepolymers of polyesters; 1,6-hexamethylene diisocyanate; ethylene diisocyanate; propylene 1,2-diisocyanate; butylene 1,2-diisocyanate; butylene 2,3-diisocyanate; pentamethylene diisocyanate; cyclopentylene 1,3-diisocyanate; cyclohexylene 1,2-diisocyanate; cyclohexylene 1,3-diisocyanate; cyclohexylene 1,4-diisocyanate; 1,10-decamethylene diisocyanate; diisocyanato dicyclohexyl methane; 1,5-diisocyanate-2,2-dimethyl pentane; hydrogenated 4,4′-diphenylmethane diisocyanate; hydrogenated tolylene diisocyanate; and isocyanates having the following formulae or structures $(OCNCH_2CH_2)_2S$; $(OCNCH_2CH_2CH_2)_2O$; $OCNCH_2CH_2CH_2CH(OCH_3)CH_2CH_2NCO$; $OCNCH_2CH_2CH_2O(CH_2)_4OCH_2CH_2CH_2NCO$:

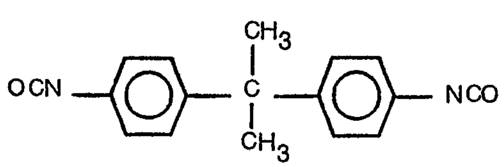
and
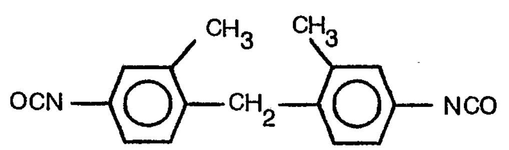

Preferred aromatic polyisocyanates are 2,4-tolylene diisocyanate 2,6-tolylene diisocyanate, 4,4′-diphenylmethane diisocyanate, polyphenylene, polymethylene polyisocyanates having an avery isocyanate functionality of 2.1 to 2.7, and mixtures thereof.

The polyisocyanate is added in an amount which is preferably at least a stoichiometric excess of the isocyanate reactive groups present in the thermoset resin solution. Unless the resins have a great number of such groups, for example, resins having a hydroxyl number in excess of 30, the polyisocyanate usually added in an amount of from about 2 to 10% by weight of the resin and solvent.

For resins having a higher (above 30) hydroxyl number less than a stoichiometric excess of polyisocyanate is suggested to avoid excessive crosslinking which results in undesirable intractable materials.

## Catalyst

Trimerization catalyst essential to the practice of the present invention may include any trimerization catalyst selected from the class consisting of quaternary ammonium hydroxides, quaternary ammonium acetates, quaternary ammonium formates, alkali metal acetates and alkali metal formates and preferably are those which are also soluble in reaction mixture.

Illustrative examples of such catalysts include N-benzyltrimethylammonium hydroxide, N-benzyl

trimethyl ammonium acetate, tetraethyl ammonium acetate, N-benzyl trimethyl ammonium formate, tetramethyl ammonium hydroxide, potassium acetate, sodium formate, potassium formate and sodium acetate. A preferred catalyst is potassium acetate. The catalyst in general is effective when present in an amount of from about 0.002 to 1% by weight of resin solution. A preferred range is from .02 to 0.4% by weight of resin solution.

Viscosity Range

The solution viscosity of the thickened polymeric systems of this invention can be varied over a wide range, by adjusting the amount of isocyanate used or trimerization catalyst or trimerization temperature as well as by varying the amount of solvent used, or by terminating the reactions when the desired viscosity has been achieved. Thickened resins of great viscosity such as sheet molding composition cannot be terminated by such means as the addition of acid due to the inherent difficulty of mixing the acid into the composition. In such instance it is therefore particularly desirable to carefully select just the right amount of isocyanate and catalyst and adjust to processing conditions to achieve the desired viscosity. In general higher amounts of isocyanate or catalyst or higher temperatures favor increased viscosities. In this manner systems viscosities up to 160 may be obtained. Polyisocyanate addition of less than about 2% by wt. will have little or no effect, above 20% high network density will cause excessive crosslinking or insoluble precipitate formation. A general range is 2—10%, of polyisocyanate, a preferred range is 4 to 8% of polyisocyanate by weight of resin solvent composition. Where polyisocyanates with a functionality of greater than 2 are used, the percent isocyanate which the system can tolerate and which will be required to obtain a given viscosity will be less.

The unusally rapid rate of thickening which occurs in general during the process of the invention is believed to be due to the formation of an interstial network of polyisocyanurate formed within the polymerizable molecules of thermoset resin dissolved in solvent. Although the applicant does not wish or intend to be bound by this theory it is believed that the polyisocyanate interspersed throughout the resin solvent composition when trimerized forms such a network to hold the polymerizable resin/solvent composition in place. It is noted that, if the resin has a molecular weight of less than about 500 the trimerized polyisocyanate tends to precipitate or otherwise indicate phase separation. It is the formation of a multicomponent system, wherein each component be it the resin, solvent, polyisocyanate or trimerized polyisocyanate remains mutually compatible to the system, without affecting the desired homogeneity of the dispersed or solubilized nature of the system, that appears to provide a major factor in the realization of optimum processing and product properties.

It has also been noted that the thickening of resins possessing a relative high number of hydroxyl groups such as above 30 is more prone to form intractable materials. This is believed to be due to an excessive degree of crosslinking. Such crosslinking is believed to be minimized when fewer hydroxyl groups are present in the resin. Such resin having a high hydroxyl number however may be thickened satisfactorily by employing less than an excess of polyisocyanate. In general resins possessing an hydroxyl number of less than 30 should be thickened by utilizing preferably a 2 to 10% amount by weight of polyisocyanate. The same range however may be used to thicken high hydroxyl number resins despite the fact that one would initially assume that all the available isocyanate groups would be used in the formation of urethane formation. Surprisingly under proper process conditions it is believed that the trimerization reaction proceeds at a more rapid pace than the urethane reaction. Proper processing conditions which promote the trimerization reaction in preference to the undesirable urethane reaction involve the selection of highly effective trimerization catalysts and temperatures which accentuate polyisocyanurate formation.

Thickening Conditions

With systems containing vinyl unsaturation the trimerization temperature should be maintained within the ambient to 110°C range, since too high a temperature may cause polymerization of the vinyl system. Certain free radical polymerization catalysts may be activated at temperatures below 110°C. The presence of such catalyst will therefore limit the reaction temperature of trimerization to a temperature below the activation temperature of the catalyst. Certain trimerization catalysts, such as quaternary ammonium compounds may decompose at temperatures above 90°C. Therefore, heating the system terminally above the decomposition temperature of the trimerization catalyst may be useful at a technique to deactivate the catalyst and may limit the actual trimerization temperature employed. The preferred range is 25—90°C.

In general the thickening process may follow the procedure where polyisocyanate is added slowly over 2—30 minutes to a solution of the polyester resin in styrene containing 0.1—1.0% of a trimerization catalyst, and the reaction temperature kept at 50—75°C. The viscosity build-up is monitored and the reaction stopped when the desired viscosity has been obtained. This will occur in a few minutes or after many hours depending on the temperature and the polyisocyanate used and the catalyst concentration. The viscosity build-up can be followed during the reaction by such techniques as measuring flow rates within the reaction flask with calibrated diptubes. When the desired viscosity is reached the reaction can be quenched by the destruction of the catalyst using acids such as methanesulfonic acid, or by destruction of residual isocyanate functions by using amines or alcohols. Alternatively the final

viscosity can be preselected by using the proper amount of polyisocyanate and allowing the reaction to go to completion.

The presence of water in the polymerizable solutions is detrimental to the reaction and may cause cloudiness and/or precipitate formation. It was found that best results could be obtained if the water content was kept below 0.2%.

When ethylenically unsaturated reaction products prepared by the process of this invention are to be used shortly after their preparation, the addition of stabilizers is not necessary. However, when it is desired to store the isocyanurate containing reaction product for a long period of time, it may be desirable to add a chemical compound which will react with the trimerization catalyst or to add a stabilizer to prevent polymerization through the ethylenic double bond or reaction of any residual isocyanate groups which may be present in the product.

Exemplary of compounds which may be added to the final reaction product to neutralize the trimerization catalyst include acids such as acetic, phosphoric, sulfuric, oxalic, methanesulfonic, maleic, fumaric, acrylic, phthalic, isophthalic, and pyromellitic acids. The use of methanesulfonic acid or a mixture of methanesulfonic acid and oxalic acid are preferred. The amount of acid to be added varies with the particular isocyanate, trimerization catalyst and activity of resin system. Generally the amount of acid should range between about 50 and 200 mole percent, and preferably from about 100 to about 175 mole percent, of the trimerization catalyst used. If the combination of methanesulfonic acid/oxalic acid is used, the amount of oxalic acid should be in the range of 0.02 to 0.05 weight percent based on the total weight of resin solution.

The addition of an acid to neutralize the trimerization catalyst is effective to impart extended shelf life to the products of this invention, particularly in the case of solutions containing at least 40% by weight of dissolved solids. Levels of residual isocyanate content of up to 0.15% and even up to 0.2% at the time the trimerization reaction is terminated with an acid, such as methane sulfonic acid, do not cause serious stability problems. However, it has been found that levels of isocyanate content above 0.1% in solutions having a concentration of less than 40% by weight of dissolved solids at the time the trimerization reaction is terminated with the addition of the acid, may adversely affect the shelf stability of the reaction mixture. For this reason it may be desirable for the maintenance of shelf life of these low solids solutions to reduce the residual NCO to levels below 0.1% through the addition of small amounts of compounds with labile hydrogen which react with NCO, such as alcohols and primary or secondary amines. Low molecular weight alcohols such as methanol, ethanol, propanols, and butanols and secondary amines are preferred. Dibutyl amine is the most preferred of those compounds. These liable hydrogen containing compounds are added to the resin solution at the end of the trimerization reaction in amounts equivalent to or slightly higher than the residual NCO at that point.

The unsaturated compositions prepared by the process of this invention may be polymerized or cured in accordance with polymerization conditions conventional in the art for the polymerization of ethylenically unsaturated materials. In general, the polymerization may be carried out by reacting the unsaturated product in the presence of a polymerization catalyst. Suitable polymerization initiators include the various peroxide initiators such as benzoyl peroxide, methyl ethyl ketone peroxide, di(2-ethylhexyl) peroxydicarbonate, t-butyl perbenzoate, dicumyl peroxide, and t-butyl hydroperoxide. Other polymerization catalysts which may be used include azo type initiators such as azobisisobutyronitrile. The amount of initiator employed is usually very small. For example, from about 1 part of initiator per 1000 parts of the polymerizable mixture to about 5 parts per 100 parts of said mixture.

In many applications, it is desirable to start the polymerization without the application of external heat. In such cases it is customary to add an accelerator to the system. Suitable accelerators include cobalt, manganese, lead, and iron compounds, such as cobalt naphthenate and manganese naphthenate, and tertiary amines such as dimethyl aniline.

The following are three illustrative examples of peroxide-promoter formulations which may be used to cure the unsaturated products of this invention:

*Formulation I*
1% Benzoyl peroxide
0.2% Dimethyl aniline

*Formulation II*
0.02% Dimethyl aniline
0.06% Cobalt naphthenate
2.0% Methyl ethyl ketone peroxide

*Formulation III*
0.3% Cobalt naphthenate
0.5% Acetylacetone peroxide (4% active oxygen)
1.5% t-butyl perbenzoate

In order to avoid premature polymerization of the compositions of this invention, a small amount of a conventional polymerization inhibitor, such as hydroquinone, methyl ether of hydroquinone, phenothiazine, and tertiary butyl catechol, may be incorporated either into the reaction mixture prior to the addition of the isocyanate or into the final product or both. For sheet molding applications stable inhibitors which do not react with isocyanate are preferred. A particularly preferred inhibitor for such applications is phenothiazine.

The resulting product, may contain any of the additives which are conventionally employed in polymerization systems, for example, antioxidants, U.V. absorbers, dyes, pigments, and mold release agents.

Thickened products prepared according to this invention, in monomeric vinyl solvents have been found particularly useful in applications such as castings, laminates, SMC or BMC where it is desirable to have excellent flexural and tensile properties. Additionally these applications may benefit by the excellent process properties of the composition of the invention in the area of curing rates, low reaction exotherms, faster mold cycles or faster preform formation due to faster thickening. The products of this invention may be used alone or in combination with other ethylenically unsaturated monomer compositions. In addition, these products may be used in combination with inorganic fillers, such as calcium carbonate, magnesium oxide, alumina trihydrate to improve fire retardant properties and other additives to reduce shrinkage; or other polymerizable resins, such as general purpose polyester resins. The products of this invention are especially useful when used in combination with glass fibers or other fibers to produce reinforced structure, such as laminates and pipe.

In recent years the automobile industry has been striving to reduce weight of most newly manufactured vehicles as a means for increasing gas mileage. A most attractive way to reduce weight is to switch from metal to light-weight plastic components. However, plastics are inherently weak and must be highly reinforced to meet tensile strength requirements of certain components such as wheels, brackets and structural panels. In order to meet this strength requirement, resins must be reinforced with materials such as glass fiber filaments in high concentrations, mostly exceeding 50% by weight. Composition having large amounts of filler, while producing very strong completely cured resins are difficult to mold into articles having uniformly distributed reinforcing materials. In producing molded articles having intricate shapes wherein a preform containing fibrous filler is squeezed between the male/female sections of the mold and the flowout exceeds 30%, it is difficult to obtain a uniformly filled article. Usually resin material flows away from the fibrous filler leaving the article more highly filled in the region of the preform and scantly filled at the mold extremities or locations of maximum flowout.

In extruding and molding conventional ethylenically unsaturated polyester resins, a high concentration of fiberglass reinforcing agent is required to produce a molded article having suitable strength. However, as the concentration of fiberglass is increased, the amount of thickening agent such as a conventional cross-linked polyurethane may also be increased. When the concentration of urethane is increased, the amount of available polyester resin is decreased, thereby diluting the high strength and flexibility characteristics of the fully cured base resin. With the combination set forth in the present invention, physical properties. Such as flex strength and heat distortion temperation, are not adversely affected the use of the present thickening method as demonstrated by the examples. It is now possible to make thickened thermoset resin glass reinforced articles of complex shape having better uniformity and strength throughout.

The properties of the shaped articles of the invention, such as the flexural and notched impact strength are improved by incorporating fibrous reinforcing materials prior to the thickening process and before the addition polymerization reaction has been completed. The fibrous materials may be, for example, glass fiber, graphite fiber, asbestos fiber, or fibrous materials derived from well-known organic polymers such as aramide fibers. These fibrous materials may be in any suitable form, for example, in the form of cloth, a mat, ribbon, tapes, chopped staple filaments or as loosely woven veils. Furthermore, they may range in length from fibrils to continuous filaments. Usually glass fibers in the range of 1—10 cms. in length are used for sheet molding applications. The amount of fibrous material to be incorporated will depend upon the desired improvements in the strength desired of the shaped article. In general, from 5 to 80% based on the total weight of the shaped article is sufficient. Where it is desirable to affect a substantial improvement in strength properties, 60—80% by weight of reinforcing agent may be required.

In addition to the fibrous materials, other fillers, such as carbon black, clay, iron oxide, lithopone, mica, silicones, siliacious materials, titanium dioxide and colored pigments may be added at some convenient time during the intermixing and preparation of the gellation precursors.

In order to describe the present invention so that it may be more clearly understood, the following examples are set forth. These examples are given primarily for the purpose of illustration and any enumeration of detail contained therein should not be interpreted as a limitation on the concept of the present invention.

In the examples the resins are designated by the names Resin I, Resin II etc. The designated resins are further characterized as follows:

Resin I

Resin I is a vinylisocyanurate resin dissolved in styrene and prepared according to the following procedure. A chemical reactor equipped with agitator, condenser, gas pipe connections, vents and port

holes is first flushed with subsurface nitrogen. Subsequently an air sparge and nitrogen stream having relative flow rates of 1 to 3 are introduced into the reactor. 2.7 parts of hydroxypropylmethcarylate (HPMA) are then charged to the reactor. The air sparge and nitrogen streams are temporarily turned off and 0.0029 parts of copper acetate monohydrate and 0.012 parts of 20% solution of tertiary butyl catachol (TBC) in styrene are charged to the reactor under continuous agitation. The air sparge and nitrogen blanket streams are turned on again and 5.7 parts of styrene are charged to the reactor. The reaction mixture is then heated to about 40°C. When the temperature of the reaction mixture reaches 40°C. the incremental addition of an 80/20 mixture of 2,4- and 2,6-toluene diisocyanates (TDI) starts. An overall amount of 3.1 parts of TDI are charged over about one hour period. During this period the exotherm of the reaction of TDI with the alcohol raises the temperature of the reaction mixture to about 90°C. If at the end of the TDI addition the temperature is lower or higher than 90° external heating or cooling is applied respectively to bring the temperature to about 90°C. The reaction mixture remains at about 90°C. for at least one hour after the total amount of TDI has been added and until the NCO content of the reaction mixture drops to below 4.5% by weight. After both conditions are met the reaction mixture is cooled to about 50°C. 0.018 parts of 40% solution of benzyltrimethylammonium hydroxide in methanol (Triton B) a trimerization catalyst), are then added in the reaction mixture. Soon after the addition of Triton B an exothermic reaction starts during the duration of which the temperature of the reaction mixture is maintained between 50—60°C. From the time the exotherm appears the viscosity and NCO content of the reaction mixture are monitored very closely. When the viscosity of the reaction mixture reaches 400—500 mPas and the NCO level drops to below 0.2%, 0.007 parts of methanesulfonic acid are added to the reaction mixture and the mixture is then cooled. When the temperature reaches about 35°C., 0.014 parts of TBC are added and the reaction is then cooled to room temperature. The resulting vinyl isocyanurate is clear, has a light yellow brown color, a viscosity of about 400—500 mPa's and a shelf life longer than 3 months.

Resin II

Resin II is a vinyl maleate urethane resin available from ICI Americas Company as ATLAC® 580—05 resin, which is a 50% styrene solution of the urethane resin.

Resin III

Resin III is a bisphenol A fumarate resin available from ICI Americas Inc. As ATLAC® 382—05 resin which is a 50% styrene solution of the furmatre resin.

Resin IV

Resin IV is a bisphenol A fumarate resin available from ICI Americas Inc. as ATLAC® 382 resin dissolved in styrene to form a 35% solution.

Resin V

Resin V is a the reaction product of methacrylic acid with the diglycidyl ether of Bisphenol A available from Dow Company as DERAKANE® 411—45 resin.

Resin VI

Resin VI is a general purpose unsaturated polyester resin available form the Marco Chemical Company a division of the W.R. Grace Company as MARCO® GR—400 resin.

In the examples, the following standard tests, procedures, and components were employed:

Castings were prepared by pouring the resin-containing composition into a mold comprising two glass plates, each of which had previously been coated with a mold release agent, spaced 3 mm apart, and sealed together on three edges. After the composition was poured into the mold, the fourth edge was sealed and the composition was allowed to cure at room temperature for 24 hours. At the end of this time, the composition was postcured by heating in an oven at 100°C. for 4 hours after which it was cooled, removed from the mold and rested.

Laminates unless otherwise indicated were prepared by impregnating a fiberglass mat with the resin-coating composition. The procedure employed was as follows:

a. A sheet of polyethylene terephthalate film was placed on a flat surface.
b. A continuous fiber glass mat (C glass veil) was placed on this layer, and coated with a layer of the resin composition.
c. A chopped fiberglass mat 42 g weight was placed on this layer, pressed into intimate contact therewith, and coated with another layer of the resin composition.
d. Similarly, a second chopped fiberglass mat, another continuous fiberglass mat (veil), and a second sheet of polyethylene terephthalate film were added, separated by layers of the resin-containing composition.

The resulting article was allowed to cure at room temperature for 24 hours. At the end of this time, it was postcured by heating in an oven at 100°C. for 4 hours. The polyethylene terephthalate films were removed and the physical properties of the laminate measured.

SMC Preparation

Sheet molding compound (SMC) may be prepared by using an I.G. Brenner 60 cm SMC machine. The machine settings and speeds discussed below may vary slightly depending on the type and size of machine used.

In the practice of the invention to form a fully cured article from the tractable handleable, moldable composition of the invention, essentially three steps are taken:

The first step is the mixing of the ethylenically unsaturated comonomer resin system with from 2—10% of polyisocyanate and from 0.1—1% of a trimerization catalyst. This can be done by automatic mixing and metering to the SMC machine, or by batch mixing and then pouring the batch into the SMC machine.

In the batch process, the polyisocyanate and the trimerization catalyst is added to the monomer resin solution and then is mixed using a Cowles Dissolver, or other similar equipment. The blended material is then split into equal portions for pouring on the front and back doctor blades. It is desirable that the temperature of the mixed ingredients not exceed 30°C to minimize high viscosity buildup which may result in poor glass wet-out. The viscosity of the non-thickened blend is in the 500—700 mPa's range for unfilled SMC.

After the liquid is poured into the doctor blade reservoirs, the machine is engaged. The polypropylene film is fed with the treated side up. The glass chopper is set at 250 rpm and produces 25 mm length cut glass. The line speed is 3 metres per minute. The doctor blade openings are calibrated to monitor the desired resin-glass ratio. When the doctor blades are set at 0.8 mm a 35 percent resin/65 percent glass SMC mat is produced which weigh approximately 28.6 g/m$^2$.

After the glass and resin are deposited on the polypropylene, the second sheet of polypropylene containing resin is placed on top and the resin system passes through a kneading roll to remove entrapped air. The SMC then goes through compaction rolls which should be heated uniformly to 37.8 ± 1°C to enhance glass wet-out and facilitate uniform maturation.

The SMC is rolled up on the take-off roll and then taken of the machine and tightly wrapped with an aluminium/cellophane composite film. The side ends of the wrapper should be pushed into the core hole. This will minimize loss of monomer by evaporation.

The rolls are then stored at room temperature and the product is matured for molding within twentyfour to fortyeight hours. The maturation will depend on the formulation and temperatures utilized. Sheet molding compounds prepared by this process remain stable for several months. It should be noted that a hot room is not necessary for regular processing of the thickened resins.

To demonstrate the molding the matured sheet composition, three 222 mm squares are cut from the large rolls after removal of the polypropylene film from each side. The squares are stacked on top of each other, and placed at the center of a 280 mm square mold. The total weight of the 3 sheets was in approximately 400 to 500 grams. The squares are compressed at 27.2 bar pressure for 2 1/2 minutes at 107°C. The cured square is tested for good flow out as evidenced by even "flash" on all four sides.

The examples demonstrate the maturation rate, molding conditions and the physical properties obtained for the cured products of resins prepared into sheet molding compositions by the above procedure unless otherwise indicated.

Tensile strength was measured in accordance with A.S.T.M. Standard D—638—71a.

Flexural strength was measured in accordance with A.S.T.M. Standard D—790—71.

Barcol Hardness was determined in accordance with 30 A.S.T.M. Standard D—2583—67.

Elongation was measured in accordance with A.S.T.M. Standard D—638—71a.

Heat distortion temperature (HDT) was measured in accordance with A.S.T.M. Standard D—648—72.

Charpy impact and Izod impact were determined in accordance with A.S.T.M. Standard D—256.

The percent free NCO was determined by titration employing the method described in Union Carbide Bulletin F—41146 entitled "Urethane Coatings Chemicals" at page 24.

The hydroxyl number refers to the number of milligrams of potassium hydroxide equivalent to the hydroxyl content of one gram of the resin.

RUBINATE M isocyanate referred to in the examples is a polymethylene polyphenyl isocyanate having an average isocyanate funcionality of 217 which is commercially available from Rubicon Chemicals Inc. "RUBINATE" is a trademark.

SMC machine referred to in the examples is an I.G. Grenner 60 cm SMC machine.

Amoco high impact styrene is a polystyrenebutadiene copolymer available from Amoco.

Vazo 64 is a polymerization catalyst available from the DuPont Company.

Viscosity measurement were determined by a Brookfield viscometers. Viscosities of less than kPa's at 25°C were measured on a Brookfield LVT Model. Viscosities of more than 2 kPa's at 25°C. were measured on a Brookfield HBT Model.

MDI referred to in the examples is diphenylmethane diisocyanate commercially available from the Upjohn Company.

Example 1

In a 9 litre mixing vessel using a Cowles dissolver for mixing, the following ingredients were compounded in the order listed:

| | |
|---|---|
| Resin I | 2686.8g |
| RUBINATE M isocyanate | 186.8g |
| Zinc stearate | 28.7g |
| Phenothiazine | 0.29g |
| 2,2′-Azobis (isobutyronitrile) Vazo 64 | 14.40g |
| Benzyltrimethylammonium hydroxide 40% in MeOH | 14.40g |

A sample of this slurry was gathered in an 225g jar and monitored for viscosity increase:

| Maturation Time | Viscosity, mPa's R.T. |
|---|---|
| 2 3/4 hrs | 64,000 |
| 24 hrs | 5,600,000 |
| 95 hrs | 7,520,000 |

The remainder of the slurry was compounded with 25 mm glass strand in an SMC machine to give a sheet consisting of 35% resin and 65% glass. The compounded sheet was rolled between polypropylene sheets and stored at room temperature for 5 days.

After the 5 day storage the sheet stock was examined and found to have a good drape suitable for compression molding.

Three 222 mm square pieces of the 5 day old SMC, weighing 445g, were placed in an 280 mm mold and cured at 107°C under 27.2 bar pressure for a period of 2 1/2 minutes. A cured plaque resulted which had filled the mold with little or no additional flash off of resin. The glass well distributed throughout the plaque. No blistering was observed.

The physical properties observed for this molding were as follows:

| | | | | |
|---|---|---|---|---|
| Tensile Strength | 22.8°C | (73°F) | 272MN | (39,430 psi) |
| Tensile Strength | 149°C | (300°F) | 160MN | (23,200 psi) |
| Tensile Modulus | 22.8°C | (73°F) | 17,513MN | ($2.54 \times 10^6$ psi) |
| Tensile Modulus | 149°C | (300°F) | 13,376MN | ($1.94 \times 10^6$ psi) |
| Flexural Strength | 22.8°C | (73°F) | 463MN | (67,100 psi) |
| Flexural Strength | 149°C | (300°F) | 174MN | (25,200 psi) |
| Flexural Modulus | 22.8°C | (73°F) | 15,169MN | ($2.20 \times 10^6$ psi) |
| Flexural Modulus | 149°C | (300°F) | 8,274MN | ($1.20 \times 10^6$ psi) |
| Izod (notched) | | | 1,580J/M | (29.6 ft-lb/in) |

Example 2

To a 9 litre mixing vessel using a Cowles dissolver as the agitation system was added the following ingredients:

| | |
|---|---|
| Resin I | 1870.0g |
| RUBINATE M isocyanate | 130.0g |
| 2.5% Phenothiazine in styrene | 8.0g |
| Zinc stearate | 20.0g |
| 2,2′-Azobis (isobutyronitrile) (Vazo 64 initiator) | 10.0g |
| Potassium acetate solution comprising<br>49.0g KOAC,<br>49.0g ethylene glycol and<br>2.0g $H_2O$ | 6.7g |

The above ingredients were agitated vigorously.

A 225 g container full of the slurry was sampled for monitoring thickening. The observed viscosity build up is recorded as follows:

| Maturation Time (hrs) | Viscosity (mPa's) |
|---|---|
| 3.0 | 43,000 |
| 5 1/3 | 208,000 |
| 22.0 | 928,000 |
| 70.0 | 1,920,000 |

The remainder of the slurry was compounded with 25 mm chopped Owens Corning 433 AA glass strand on an SMC machine to give a sheet compound consisting of 35% by wt. of resin slurry and 65% by wt. of glass strand. The sheet stock was rolled between two sheets of polypropylene and stored at room temperature.

Sixteen days after the sheet stock has been compounded it was unrolled for molding. The sheet had a good drape and was not tacky. Three 229 mm square pieces were cut from the sheet stock. The total wt. of the pieces was 435.0 grams. These pieces of sheet stock were placed in an 280 mm square mold and cured at 107°C and 24.4 bar of pressure for a period of 5 minutes. A small amount of flash off of resin resulted.

The sample spread evenly to fill the mold and cured to a hard amber colored plaque.

The plaque was tested for physical properties with the following results:

| | | | | |
|---|---|---|---|---|
| Tensile Strength | 22.8°C | (73°F) | 279MN | (40,500 psi) |
| Tensile Modulus | 22.8°C | (73°F) | 16,755MN | ($2.43 \times 10^6$ psi) |
| Flexural Strength | 22.8°C | (73°F) | 459MN | (66,600 psi) |
| Izod (notched) | 22.8°C | (73°F) | 1,615J/M | (29.70 ft-lbs/in) |
| Barcol | | | | (48—62) |

## Example 3

The following ingredients were mixed in a 225g container

| | |
|---|---|
| Resin II | 186.0g |
| RUBINATE M isocyanate | 14.0g |
| 2.5% Phenothiazine in styrene | 0.8g |
| Benzyltrimethylammonium hydroxide | 1.0g |

The sample was allowed to maturate at room temperature. The observed viscosity increase is noted:

| Maturation Time (hrs) | Viscosity (mPa's) |
|---|---|
| 0 | 410 |
| 72 | 7,600,000 |
| 144 | 11,000,000 |

Example 4

The following ingredients were combined in a 9 litre mixing vessel using a Cowles dissolver for agitation.

| | |
|---|---|
| Resin I | 1860.0g |
| Toluene diisocyanate | 140.0g |
| 2.5% Phenothiazine in styrene | 12.0g |
| 2,2′-Azobis(isobutyronitrile) (Vazo 64) | 10.0g |
| Benzyltrimethylammonium hydroxide | 10.0g |

A 225g container of the slurry was sampled and monitored for viscosity build-up.

| Time (hrs) | Viscosity (mPa's) |
|---|---|
| 0 | 600 |
| 2 | 63,000 |
| 3.5 | 220,000 |
| 20 | 2,000,000 |

The remainder of the slurry was compounded with 25 mm Owens Corning 433 AA chopped glass strand on an SMC machine to give an approximate 35:65, resin to glass, sheet stock. The sheet was rolled between 2 polypropylene sheets and stored at room temperature. After 3 days the sample was unrolled and was found to be non-sticky with a drape suitable for molding. Three 216 mm square pieces were cut from the sheet and placed in 280 mm square mold. The sample was cured at 107°C under 17 bar of pressure for 5 minutes.

The resulting plaque had filled the mold with very little flash-off of resin. The physical properties observed for this plaque are listed:

| | | | | |
|---|---|---|---|---|
| Flexural Strength | 22.8°C | (73°F) | 329MN | (47,700 psi) |
| Flexural Strength | 149°C | (300°F) | 116MN | (16,800 psi) |
| Flexural Modulus | 22.8°C | (73°F) | 13,445MN | (1.95 × $10^6$ psi) |
| Flexural Modulus | 149°C | (300°F) | 6,895MN | (1.00 × $10^6$ psi) |
| Barcol at | 22.8°C | (73°F) | | (46—69) |
| Barcol at | 149°C | (300°F) | | (20—26) |

Example 5

The following ingredients were mixed in a 225g jar.

| | |
|---|---|
| Resin III 38 | 100.0g |
| Toluene diisocyanate | 5.0g |
| Benzyltrimethylammonium hydroxide | 0.5g |

The sample was allowed to maturate at room temperature. The following viscosity increase was observed:

| Maturation Time (hrs) | Viscosity (mPa's) |
|---|---|
| 0 | 560 |
| 24 | 104,000 |
| 48 | 3,200,000 |
| 72 | 44,800,000 |
| 9 days | 96,000,000 |

Although the sample thickened to the degree noted the sample maintained its clear light yellow appearance. No turbidity or opacity developed.

The next examples were all performed in an appropriate sized mixing vessel, for example 300 grams resin quantities were mixed in a 500 ml vessel, 400 grams resin quantities were mixed in a 1000 ml vessel etc.

Example 6

To 300g of Resin II (50% styrene), heated to 75°C., were added 500 mg hydroquinone, 0.15 ml potassium acetate catalyst solution, and 10 ml toluenediisocyanate over 22 minutes. After heating for an additional 18 minutes the reaction was quenched with 0.7 ml hydroxypropylmethacrylate and 0.25 ml dibutylamine. To 200 g of the above solution were added 200g of styrene. The resulting solution had a viscosity at 25°C. of 190 mPa's. A corresponding unthickened solution has a viscosity of 20 mPa's.

Example 7

To 400g of Resin II (50% styrene), heated to 75°C., were added 200 mg hydroquinone, 1.04 ml of potassium acetate catalyst solution, and dropwise 20 ml toluenediisocyanate over 20 minutes. After heating for an additional 58 minutes, analysis showed 30% remaining free isocyanate. The reaction was quenched with 17 ml dibutylamine and 0.4 ml methanesulfonic acid within 12 minutes at 76°C. IR data showed no residual NCO groups. The above solution was protected with 200 mg hydroquinone. The viscosity at 25°C. was 862 mPa's. The starting viscosity was 190 mPa's.

Example 8

To 400g of Resin II (50% styrene), heated to 75°C., were added 200 mg hydroquinone, 1.04 ml potassium acetate catalyst solution and dropwise 16 ml toluenediisocyanate over 14 minutes. Heating was continued for 40 minutes at which time 7.4% residual NCO remained. The reaction was quenched with 0.4 ml methanesulfonic acid and 1 ml dibutylamine. The solution was protected with 200 mg hydroquinone. The viscosity at 25°C was 3900 mPa's. The starting viscosity was 190 mPa's.

Castings made with the above products had properties given in Table I.

Table I
Casting Properties of Thickened VMU Resins (1/8") 3 mm

| | | EX. 6 | EX. 7 | EX. 8 |
|---|---|---|---|---|
| Flex Strength 22.8°C (73°F) | MN | 117 | 157 | 148 |
| | psi | 17,000 | 22,700 | 21,500 |
| Flex Modulus 22.8°C (73°F) | MN | 3,241 | 3,310 | 3,310 |
| | $10^6$ psi | 0.47 | 0.48 | 0.48 |
| Barcol Hardness | | 28—32 | 36—40 | 33—48 |
| Heat Distortion Temperature | | 95°C | 114°C | 102°C |
| Charpy Impact | J/M | 418 | 375 | 407 |
| | ft-lb/in | 7.68 | 6.9 | 7.49 |

Example 9

To 400g of Resin II (50% styrene), heated to 75°C., were added 200 mg hydroquinone, 0.5 ml benzyltrimethylammonium hydroxide (40% in methanol) and 14 ml toluenediisocyanate dropwise over 13 minutes. After 2 1/2 hours at 74°C IR data indicated that most of the NCO groups had reacted. The reaction was quenched with 1 ml hydroxypropylmethacrylate and 200 mg hydroquinone. The viscosity of the product at 25°C was 5000 mPa's. The starting viscosity was 190 mPa's.

Example 10

A solution of 50g Resin II (50% styrene and 3.0g methylenediphenylene diisocyanate (MDI), 100 mg hydroquinone and 6 drops potassium acetate catalyst solution was heated at 75°C. for 1 hour. There was a definite increase in viscosity. The product was a cloudy liquid.

Thickened dilute solutions may be obtained in two ways. The dilute solution can be thickened directly, or it may be adjusted to the proper concentration after thickening of a more concentrated solution. Both techniques are demonstrated below:

Example 11

To 1260g of Resin III (50% styrene) and 540g styrene, heated to 75°C. were added 320 mg hydroquinone, 1 ml potassium acetate catalyst solution and 20 ml toluenediisocyanate dropwise over 8 minutes. Reaction was continued for 7 hours. IR analysis showed no remaining NCO groups. Viscosity at 25°C. was 540 mPa's. The viscosity of an unthickened 65% styrene solution is 100 mPa's.

Example 12

To 1260g of Resin III (50% styrene) heated to 75°C. were added 320 mg hydroquinone, 1 ml potassium acetate solution and 20 ml toluene-diisocyanate dropwise over 4 minutes. Reaction was continued for 4 hours. IR analysis showed no remaining NCO groups. To the solution were added 320 mg hydroquinone and 540g styrene. Viscosity at 25°C. was 800 mPa's. The resulting product contains 65% styrene.

The properties of this resin system in castings and laminates is given in Table II.

Example 13

To 50g of Resin IV (35% in styrene) were added 50 mg hydroquinone, 1g toluenediisocyanate and 0.2 ml 40% solution benzyltrimethylammonium hydroxide in methanol. The solution after 16 hours at 50°C. had a viscosity at 25°C. of 390 mPa's.

Table II

| Casting and Laminate Properties of Thickened Low Solids Resin III | | Casting of Thickened Resin II of Ex. 14 | Laminate of Thickened Resin III of Ex. 14 |
|---|---|---|---|
| **Properties** | | | |
| Flexural Strength | MN | 121 | 112 |
| | psi | 17,600 | 16,300 |
| Flexural Modulus | MN | 3,172 | 5,240 |
| | psi $10^6$ | 0.46 | 0.76 |
| Barcol | | 39—43 | 43—49 |
| Tensile Strength | MN | 72 | 86 |
| | psi | 10,500 | 12,500 |
| Tensile Modulus | MN | 2,275 | 5,378 |
| | psi $10^6$ | 0.33 | 0.78 |
| % Elongation | | 5.93 | 1.85 |
| HDT, °C | | 89 | — |
| Impact — Charpy | J/M | 283 | — |
| | ft-lb/in | 5.2 | — |
| Impact — Notched Izod | J/M | — | 502 |
| | ft/lb/in | — | 9.24 |
| % Glass | | — | 24.77 |

Example 14

To 100g of Resin V (45% in styrene) were added 50 mg hydroquinone, 300 mg potassium acetate solution and dropwise at 70°C., 2 ml toluenediisocyanate. The solution was heated for 1 1/2 hours at 70°C., at which time all isocyanate had reacted. The reaction was stabilized by the addition of 0.1 ml methanesulfonic acid. The viscosity of the solution at 25°C. is 2200 mPa's. Initially Resin VI had a viscosity of 500 mPa's.

Example 15

To 100g of Resin VI (50% in styrene) were added 0.27g potassium acetate solution, 50 mg hydroquinone and dropwise 4 ml toluenediisocyanate at 70°C. The product was heated for 80 minutes. The product had a viscosity at 25°C. of 9000 mPa's. The starting material had a viscosity of 975 mPa's/25°C.

**Claims**

1. A method of increasing the viscosity of a uniformly dispersed or solubilized composition comprising at least 10% by weight of a polymerizable material and up to 90% by weight of a solvent or dispersion medium which comprises mixing into the composition an effective amount of a polyisocyanate and a catalytic amount of trimerization catalyst, and trimerizing the polyisocyanate.

2. A method according to claim 1 in which the polymerisable material includes ethyleric unsaturation and the solvent or dispersion medium is an ethylenically unsaturated monomer.

3. A method according to claim 1 or claim 2 in which the composition is thickened to a viscosity of at least one kPa's.

4. A method according to any one of claims 1 to 3 in which the polymerisable material is from 10 to 75% by weight of the composition and is selected from

i) a polyester comprising the reaction product of polyoxyalkylene bisphenol ether polyols and an unsaturated dicarboxylic acid;

ii) the addition reaction product of an epoxy resin and a carboxylated vinyl monomer;

iii) a vinyl ester urethane comprising the reaction product of (a) the reaction product of a polyoxyalkylene bisphenol ether polyol and a polycarboxylic acid or anhydride; (b) a poly functional isocyanate and (c) a monohydroxyl-terminated ester of acrylic or methacrylic acid;

iv) an isocyanurate of a urethane of an aromatic polyisocyanate and at least one vinylidene carbonyl oxy-alkanol.

5. A partly shaped article in which the article is made by shaping a composition prepared by a method according to any one of claims 1 to 4 and in which a free radical polymerisation catalyst is included in the composition before trimerisation has proceeded to an extent which prevents good dispersion thereof.

6. A partly shaped article according to claim 5 in which there is also dispersed a reinforcing filler.

7. A shaped article made by activating the free radical polymerisation catalyst contained in a partly shaped article according to claim 5 or claim 6.

8. A shaped article according to claim 7 in which the article is further shaped before the activation step.

**Revendications**

1. Procédé pour augmenter la viscosité d'une composition uniformément dispersée ou solubilisée comprenant au moins 10% en poids d'une matière polymérisable et jusqu'à 90% en poids d'un solvant ou milieu de dispersion, qui comprend le mélange, à la composition, d'une quantité efficace d'un polyisocyanate et d'une quantité catalytique d'un catalyseur de trimérisation, et la trimérisation du polyisocyanate.

2. Procédé suivant la revendication 1, dans lequel la matière polymérisable comprend de l'insaturation éthylénique et le solvant ou milieu de dispersion est un monomère éthyléniquement insaturé.

3. Procédé suivant la revendication 1 ou 2, dans lequel la composition est épaissie jusqu'à une viscosité d'au moins 1 kPa.s.

4. Procédé suivant l'une quelconque des revendications 1 à 3, dans lequel la matière polymérisable forme 10 à 75% en poids de la composition et est choisie entre:

i) un polyester comprenant le produit de réaction d'un acide dicarboxylique insaturé et d'étherpolyols polyoxyalcoyléniques de bisphénol;

ii) le produit de réaction d'addition d'une résine époxyde et d'un monomère vinylique carboxylé;

iii) un uréthane-ester vinylique comprenant le produit de réaction (a) du produit de réaction d'un éther-polyol polyoxyalcoylénique de bisphénol et d'un acide ou anhydride polycarboxylique; (b) d'un isocyanate polyfonctionnel et (c) d'un ester monohydroxy-terminé d'acide acrylique ou méthacrylique;

iv) un isocyanurate d'un uréthane d'un polyisocyanate aromatique et au moins un vinylidènecarbonyloxyalcanol.

5. Objet partiellement façonné, dans lequel l'objet est fait par façonnage d'une composition préparée par un procédé suivant l'une quelconque des revendications 1 à 4 et dans lequel un catalyseur de polymérisation par radicaux libres est inclus dans la composition avant que la trimérisation ait progressé jusqu'à un degré empêchant sa bonne dispersion.

6. Objet partiellement façonné suivant la revendication 5, dans lequel une charge de renforcement est dispersée aussi.

7. Objet façonné obtenu par activation du catalyseur de polymérisation par radicaux libres contenu dans un objet partiellement façonné suivant la revendication 5 ou 6.

8. Objet façonné suivant la revendication 7, qui est façonné à nouveau avant l'activation.

**Patentansprüche**

1. Verfahren zur Erhöhung der Viskosität einer gleichmäßig dispergierten bzw. verteilten oder löslich gemachten Masse, die mindestens 10 Gew.-% eines polymerisierbaren Materials und bis zu 90 Gew.-% eines Lösungs- oder Dispersionsmittels enthält, bei dem in die Masse eine wirksame Menge eines Polyisocyanats und eine katalytische Menge eines Trimerisierungskatalysators eingemischt werden und das Polyisocyanat trimerisiert wird.

2. Verfahren nach Anspruch 1, bei dem das polymerisierbare Material ethylenische Doppelbindungen enthält bzw. ethylenisch ungesättigt ist und das Lösungsoder Dispersionsmittel ein ethylenisch ungesättigtes Monomeres ist.

3. Verfahren nach Anspruch 1 oder 2, bei dem die Masse bis zu einer Viskosität von mindestens 1 kPa.s verdickt wird.

4. Verfahren nach einem der Ansprüche 1 bis 3, bei dem das polymerisierbare Material 10 bis 75 Gew.-% der Masse ausmacht und aus

i) einem Polyester, der aus dem Reaktionsprodukt von Polyoxyalkylenbisphenoletherpolyolen und einer ungesättigten Dicarbonsäure besteht,

ii) dem Additionsreaktionsprodukt eines Epoxyharzes und eines carboxylierten Vinylmonomeren,

iii) einem Vinylesterurethan, das aus dem Reaktionsprodukt von (a) dem Reaktionsprodukt eines Polyoxyalkylenbisphenoletherpolyols und einer Polycarbonsäure oder eines Polycarbonsäureanhydrids, (b) einem polyfunktionellen Isocyanat und (c) einem *eine* Hydroxylgruppe als Endgruppe aufweisenden Ester der Acryloder Methacrylsäure besteht, und

iv) einem Isocyanurat eines Urethans eines aromatischen Polyisocyanats und mindestens eines Vinylidencarbonyloxyalkanols ausgewählt ist.

5. Teilweise geformtes Teil, hergestellt durch Formen einer durch ein Verfahren nach einem der Ansprüche 1 bis 4 hergestellten Masse, wobei in die Masse ein Radikalpolymerisationskatalysator hineingebracht wird, bevor die Trimerisierung in einem Ausmaß, das ein gutes Dispergieren des Radikalpolymerisationskatalysators verhindert, fortgeschritten ist.

6. Teilweise geformtes Teil nach Anspruch 5, in dem auch ein verstärkender Füllstoff dispergiert ist.

7. Formteil, hergestellt durch Aktivierung des in einem teilweise geformten Teil nach Anspruch 5 oder 6 enthaltenen Radikalpolymerisationskatalysators.

8. Formteil nach Anspruch 7, wobei das Teil des weiteren vor dem Aktivierungsschritt geformt wird.